Europäisches Patentamt

European Patent Office

Office européen des brevets

(11) Publication number: **0 224 349 B1**

# EUROPEAN PATENT SPECIFICATION

(45) Date of publication of patent specification: **17.10.90**

(21) Application number: **86308633.6**

(22) Date of filing: **05.11.86**

(51) Int. Cl.⁵: **C 08 F 255/00** // (C08F255/00, 222:02)

(54) **Chemically modified polyolefin.**

(30) Priority: **21.11.85 FI 854608**

(43) Date of publication of application:
**03.06.87 Bulletin 87/23**

(45) Publication of the grant of the patent:
**17.10.90 Bulletin 90/42**

(84) Designated Contracting States:
**AT BE CH DE FR GB IT LI LU NL SE**

(56) References cited:
**EP-A- 31 701**
**EP-A- 171 167**
**EP-A- 183 493**
**EP-A- 225 048**
**EP-A- 225 067**
**FR-A- 1 268 469**
**GB-A- 1 156 606**

**CHEMICAL ABSTRACTS, vol. 89, no. 22,
November 1978, page 44, abstract no. 180990s,
Columbus, Ohio, US**

(73) Proprietor: **NESTE OY
Keilaniemi
SF-02150 Espoo 15 (FI)**

(72) Inventor: **Bergstrom, Christer
Pietarinkatu 10 C 19
SF-00140 Helsinki (FI)**
Inventor: **Bjorkvall, Barbro
Stenbockens vag 5F
SF-00740 Helsinki (FI)**
Inventor: **Stenlund, Bengt
Peltolavagen 6 B 61
SF-20720 Turku (FI)**
Inventor: **Huttunen, Jouko
Kompassitie 12
SF-06150 Porvoo (FI)**
Inventor: **Johansson, Carl-Johan
Wadenstrominkuja 32
SF-06100 Porvoo (FI)**

(74) Representative: **Ruffles, Graham Keith et al
MARKS & CLERK 57-60 Lincoln's Inn Fields
London WC2A 3LS (GB)**

Courier Press, Leamington Spa, England.

## EP 0 224 349 B1

**Description**

The present invention concerns a chemically modified polyolefin which has good adhesion to metals and to other polar substances.

Polyethylene and polyolefins in general are characterized by poor adhesion to metals and to materials containing polar groups. Somewhat better adhesion is achieved in some instances by copolymerizing unsaturated esters, such as vinyl acetate or alkyl-(meth)acrylate, (methylacrylate, ethylacrylate, butylacrylate, etc.), but even these copolymers display insufficient adhesion in most multi-ply structures. Many ways to improve this adhesion have been tried. For instance, unsaturated acids or acid anhydrides have been used as comonomer, particularly in the polymerizing of copolymers or terpolymers. Examples of commercial applications are: ethylene/acrylic acid copolymer containig 9% acrylic acid, and ethylene/methacrylic acid copolymer containing 9% methacrylic acid. One known commercial terpolymer contains 4% acrylic acid and 7% butylacrylate. Also commercially available is a product in which the methacrylic acid is partially neutralized to a salt so that a so-called ionomer has been obtained. An example of the use of maleic acid anhydride for better adhesion is presented by an application in which maleic acid anhydride has been grafted to LDPE, HDPE or EVA. Another example is the terpolymer of ethylene, butylacrylate and maleic acid anhydride.

Direct copolymerizing of ethylene with an unsaturated acid is disadvantageous for a number of reasons. The acids are corrosive and curtail the life span of the apparatus, both in the synthesis step and in the working step. Moreover, these ethylene/acid copolymers or terpolymers are thermally unstable and one is therefore compelled to employ low working temperatures, implying restrictions of production rate and product quality. Large acid quantities are indispensable for reaching satisfactory adhesion because these copolymerized acids are immobile and it is therefore difficult for them to force themselves out from the polymer matrix and to reach the polar groups present in the other boundary layer. Large acid quantities are also required in order to lower the crystallinity, this being indispensable if adhesion is to be achieved. Of course, this can also be achieved by using a third monomer, such as butylacrylate or vinyl acetate, for instance. However, terpolymers are uneconomical as regards recovery of the copolymers in the synthesis and, as a result, the content of the comonomer which is active regarding adhesion is limited. The total content of the comonomer is also limited in view of foodstuff compatibility, in the legislation of various countries. High vinyl acetate quantities also introduce corrosion problems. The crystallinity may also be lowered by admixing a thermoplastic elastomer, such as polyisobutylene (PIB), for instance. For instance when grafting maleic acid anhydride one has endeavoured to improve its mobility by using spacer groups between maleic acid anhydride and polymer (Diels-Alder reaction between diene and maleic acid anhydride and grafting thereof with the polymer). Polyolefins modified by a graft polymerisation are, for example, described in FR—A—1268469, EP—A—031701, GB—A—1156606, EP—A—171167, EP—A—183493 and EP—A—225048.

The object of the invention is to achieve an improvement of presently known modified polyolefins.

According to the invention there is provided a chemically modified polyolefin having good adhesion to metals and other polar substances, and comprising ethylene copolymer to which has been grafted itaconic acid, characterised in that the ethylene copolymer is ethylene/butylacrylate (EBA), ethylene/ethylacrylate (EEA), ethylene/methylacrylate (EMA), or ethylene/vinylacetate (EVA), and that the amount of itaconic acid which has been grafted is 0.1—1% of the weight of the polyolefin.

When a polyolefin is being grafted with itaconic acid as taught by the invention, the situation is considerably more favourable than in the instances mentioned above. Itaconic acid is considerably less corrosive than, for instance, acrylic acid, methacrylic acid or maleic acid anhydride, and by grafting itaconic acid to polyolefin much lower contents can be used than when copolymerising unsaturated acids. When itaconic acid is grafted to polyolefin, adhesion is obtained which is the better, the lower the degree of crystallisation because a lower degree of crystallisation produces lower stresses in the boundary surface. Accordingly, the present invention is characterised by the use of the specified ethylene copolymers, with low degree of crystallisation. When EBA, EEA, EMA or EVA (being polyolefins having low degree of crystallisation) are grafted with itaconic acid, it is possible to achieve good enough adhesion with acid contents which are less than 1%. An acid content as low as this is very favourable, considering raw material costs, life span of apparatus (minimal corrosion) and manufacturing technique (the grafting polymer concentrate may be diluted). Moreover, itaconic acid is less corrosive than e.g. acrylic acid, methacryloic acid or maleic acid anhydride, which even at low contents give rise to corrosion and, for this reason, to discolouring of the product. Itaconic acid is also superior in the respects of labour hygiene and foodstuff compatibility, and it is easier to handle in production because it comes in solid form and has a high boiling point. Itaconic acid becomes grafted far more efficiently than e.g. acrylic acid, methacrylic acid or maleic acid anhydride, which tend to boil off in connection with compounding and, furthermore, become incompletely grafted. When doing grafting with itaconic acid one can use far lower acid contents than in the copolymerising process, and for this reason one obtains better thermal stability and may use lower comonomer contents, and in this way meet the foodstuff compatibility requirements in various applications.

When, as taught by the present invention, polyolefins are grafted with itaconic acid, the starting materials are the above-mentioned polyolefins, 0.1—1% itaconic acid and 0.01—0.5% radical former, and

2

these are mixed at a temperature at which the mixture is in molten state and the radical former is decomposed and forms those radicals which cause the grafting. Mixing may be in a batch process, or continuous, and the components may be added all at one time or separately, or in pairs. It is most advantageous if the mixture is first melt-homogenised at a lower temperature and the temperature is then raised to a level at which the radical former forms radicals. Grafting may also be accomplished in a way other than just described.

When a polyolefin is grafted with itaconic acid, it is to greatest advantage to use an ethylene copolymer having the lowest possible degree of crystallisation, namely EVA, EBA, EEA or EMA. It is possible by adding e.g. a thermoplastic elastomer to achieve efficient lowering of the degree of crystallisation. For radical former, one may use organic peroxides, peresters, percarbonates or radical formers of another type. Usually the following are used: dicumyl peroxide, cumyl tert. butylperoxide, or di-tert butylperoxide. The formulation may moreover contain chain shift agents, antioxidants or others additives typical with polyolefins.

Polyolefin grafted with itaconic acid in the manner described may be used as so-called adhesion polymers in the manufacturing of multi-ply products which contain one or several polyolefin courses and one or several courses of polar plastic (such as polyamide, EVOH, etc.) or of metal (such as aluminium, steel, copper, etc.). Such multi-ply products may be produced by coextrusion, by (co)extrusion coating or by (co)extrusion lamination, and the objects may be films, sheets, tubes, cables, bottles, etc. It is also possible to use such adhesion plastic as adhesion layer in powder coating steel tubes for instance. In so-called plastic alloys, which are composed of unmiscible (e.g. polar and non-polar plastics, these adhesion plastics may likewise be used as so-called emulsifier polymers in order to achieve adhesion between the two phases and, thereby, better technological properties. The adhesion to other polar materials (e.g. glass, minerals, wood) may also be improved in this way.

The invention is now more closely described with the aid of the non-restrictive examples following below.

## Example 1

In a Brabender extruder ($\phi = 19$ mm, L = 20D, and compression ratio 3:1) were extruded mixtures of LDPE (MI = 4, = 0.922) and EBA (MI = 4, BA 17%), in different proportions, together with 0.05% ditertiary butylperoxide and 1% unsaturated acid (itaconic acid, IA; acrylic acid, AA; maleic acid anhydride, MAN). The temperature in the extrusion press was 105°C, 200°C and 250°C and in the nozzle, 250°C. The nozzle was of coextrusion type, and for the other course was extruded PA-6 (BASF Ultramid® B4), at 250°C. The speed of rotation of the screw was 41 min$^{-1}$. In this way, two-ply strips (acid-grafted polymer and PA-6) were extruded, which were tested for adhesion after 24 hrs. This test was done with the Instron pulling tester (Peel Test), the pulling rate being 50 mm/min. The force was measured after equilibrium had been established, and it was expressed in units N/cm.

Table I reveals how the content of butylacrylate (BA) influences the adhesion.

### TABLE I

| Polymer % BA | Adhesion (N/cm) | | |
| --- | --- | --- | --- |
| | 1% IA | 1% AA | 1% MAN |
| 0 | 5.8 | 5.8 | 3.5 |
| 5 | 6.4 | 6.4 | 6.6 |
| 10 | 18.9 | 12.8 | 9.7 |
| 13 | 27.5 | 23.0 | 19.8 |
| 17 | 53.0 | 37.3 | 40.2 |

It is seen from these results that a substantial improvement in adhesion to PA-6 takes place when the butylacrylate content of the acid-grafted polymer is increased. It may further be noted that itaconic acid is better than acrylic acid and maleic acid anhydride when the butylacrylate content is high. It may be mentioned for comparison that the adhesion of non-grafted 17% EBA is 0.5 N/cm, and 0.2 N/cm is obtained when using non-grafted polyethylene.

## Example 2

The test was performed in this case as in Example 1, except that EBA (MI = 4, BA = 17%) only was used for basic polymer when the acid content was varied. Table II reveals the influence of acid content (IA, AA, MA) on adhesion.

## EP 0 224 349 B1

### TABLE II

| Acid content % | Adhesion (N/cm) | | |
|---|---|---|---|
| | IA | AA | MAN |
| 0.3 | 50.0 | 9.6 | 35.0 |
| 0.5 | 48.6 | 46.3 | 35.0 |
| 0.7 | 45.0 | 36.0 | 40.0 |
| 1.0 | 53.0 | 37.3 | 40.2 |
| 1.5* | 54.0 | 44.1 | 41.6 |

\* Outside the scope of the present claims.

It is seen from these results that if the butylacrylate content is as high as 17%, one can manage with very low acid concentrations (<1%). In that case, too, itaconic acid is superior to acrylic acid and maleic acid anhydride.

### Example 3

In this case the testing was done as in Example 1, except that instead of EBA, EVA (MI = 2, VA = 20%) was used for ethylene component of the mixtures and for unsaturated acids, itaconic acid and acrylic acid were used.

### TABLE III

| Polymer % comonomer | Adhesion (N/cm) | | |
|---|---|---|---|
| | VA 1% IA | VA 1% AA | BA 1% IA |
| 0 | 5.8 | 5.8 | 5.8 |
| 5 | 9.2 | 8.6 | 6.4 |
| 10 | 12.2 | 17.8 | 18.9 |
| 13 | 32.2 | 25.3 | 27.5 |
| 17 | 33.0 | 28.5 | 53.0 |
| 20 | 41.7 | 34.3 | — |

It is seen from these results that adhesion to PA-6 is also substantially improved when the vinyl acetate content is increased, this being due to lowering of the degree of crystallisation of the polymer. In this case, too, better adhesion is obtained with itaconic acid than with acrylic acid when the vinyl acetate content is high. It may be mentioned by way of comparison that the adhesion of non-grafted 20% EVA is 0.5 N/cm.

### Example 4

In this case the testing was done as in Examples 1—3, except that comparisons regarding adhesivity to various materials (Polyamide-6, BASF Ultramid® B4; Ethylene/vinylalcohol, EVAL®-F; Aluminium, Steel) were instituted. For metal coating, a nozzle was constructed through which the metal strip (20 mm × 1.0 mm) could be pushed. EBA (M = 4, BA = 17%) was grafted with 1% itaconic acid and 1% acrylic acid, and EVA (MI = 2, VA = 20%) was grafted with 1% itaconic acid. It can be seen in Table IV how said graft polymers and their basic polymers adhere to different metals.

4

EP 0 224 349 B1

TABLE IV

| Polymer | PA-6 | Adhesion (N/cm) | | |
| | | EVOH | Al | Fe |
| --- | --- | --- | --- | --- |
| IA-grafted EBA | 53.0 | 14.9 | 18.4 | 11.5 |
| EBA | 0.5 | 3.0 | 10.5 | 9.8 |
| IA-grafted EVA | 41.7 | 6.0 | 35.1 | 37.3 |
| EVA | 0.5 | 1.0 | 14.7 | 6.6 |
| AA-grafted EBA | 37.3 | 6.4 | 50.3 | 82.6 |

It is seen from these results that both 17% EBA and 20% EVA have some adhesion to aluminium and steel, but remarkable improvement is achieved by grafting them with itaconic acid. This improvement is greater in the case of EVA. When 17% EBA is grafted with acrylic acid, however, better adhesion than with itaconic acid is obtained.

The adhesion to ethyl/vinylalcohol (EVOH) also improves both with itaconic acid and with acrylic acid. In this case, as also in the case of PA-6, the combination of itaconic acid and EBA is most favourable.

Example 5

In this case, testing was done as in Example 4, except that comparisons were instituted with commercial adhesion polymers.

Table V reveals how itaconic acid-grafted EBA and EVA adhere to different materials, compared with commercial adhesion polymers.

TABLE V

| Polymer | PA-6 | Adhesion (N/cm) | | |
| | | EVOH | Al | Fe |
| --- | --- | --- | --- | --- |
| IA-grafted EBA | 53.0 | 14.9 | 18.4 | 11.5 |
| IA-grafted EVA | 41.7 | 6.0 | 35.1 | 35.3 |
| Primacor® 1420 9% AA | 55.0 | 2.6 | 10.3 | 8.3 |
| Nucrel® 0903 9% MAA | 23.3 | 1.3 | 7.0 | 3.4 |
| Surlyn® 1650 12% MAA + Zn | 71.3 | 0 | 5.5 | 8.1 |
| CXA 3095 | 7.0 | 3.4 | 7.1 | 9.5 |
| Lupolen® A2910M 4% AA + 7% BA | 36.6 | 3.4 | 6.4 | 7.5 |

It can be seen from these results that 17% EBA and 20% EVA to which 1% itaconic acid has been grafted have better adhesion to metals, such as aluminium and steel, and to EVOH, than commercial adhesion polymers. The adhesion to polyamide-6 is also competitive.

In the following are stated the claims, details being understood to be variable within the scope of the inventive idea defined by them.

**Claims**

1. A chemically modified polyolefin having good adhesion to metal and other polar substances, and comprising ethylene copolymer to which has been grafted itaconic acid, characterised in that the ethylene copolymer is ethylene/butylacrylate (EBA), ethylene/ethylacrylate (EEA), ethylene/methylacrylate (EMA), or ethylene/vinylacetate (EVA), and that the amount of itaconic acid which has been grafted is 0.1—1% of the weight of the polyolefin.

5

2. A film, sheet, tube, cable, bottle or other composite product comprising at least one layer of chemically modified polyolefin according to claim 1, at least one layer of metal, polar plastics or other polar material, and optionally at least one layer of an unmodified polyolefin.

3. A composite product according to claim 2, characterised in that it is a film.

4. A composite product according to claim 2, characterised in that there is at least one metal layer of steel, aluminium or copper and at least one polar plastics layer of polyamide, polyester or EVOH.

## Patentansprüche

1. Chemisch modifiziertes Polyolefin mit guten Adhäsionsfähigkeiten an Metallen oder anderen polaren Substanzen, und mit einem Äthylen-Copolymer, auf das itaconische Säure aufgetropft ist, dadurch gekennzeichnet, dass das Äthylen-Copolymer ein Äthylen/Butylacrylat (EBA), ein Äthylen/Äthylacrylat (EEA), ein Äthylen/Methylacrylat (EMA) oder ein Äthylen/Vinylacetat (EVA) ist, und dass die Menge der aufgetropften itaconischen Säure im Bereich von 0.1 bis 1 Gew.-% des Polyolefins liegt.

2. Folie, Blatt, Rohr, Kabel, Flasche oder ein anderes zusammengesetztes Produkt mit mindestens einer Schicht aus einem chemisch modifizierten Polyolefin nach Anspruch 1, dadurch gekennzeichnet, dass mindestens eine Schicht aus Metall, polarem Kunststoff oder einem anderen polaren Material besteht, und dass als Option mindestens eine Schicht aus einem nicht modifizierten Polyolefin vorgesehen ist.

3. Produkt nach Anspruch 2, dadurch gekennzeichnet, dass es eine Folie ist.

4. Produkt nach Anspruch 2, dadurch gekennzeichnet, dass mindest eine Metallschicht aus Stahl, Aluminium oder Kupfer, und mindestens eine polare Kunststoffschicht aus einem Polyamid, Polyester oder EVOH besteht.

## Revendications

1. Polyoléfine modifiée chimiquement qui a de bonnes propriétés d'adhérence aux métaux et autres substances polaires, et qui comprend un copolymère de l'éthylène auquel a été greffé de l'acide itaconique, caractérisée en ce que le copolymère de l'éthylène est l'éthylène/acrylate de butyle (EBA), l'éthylène/acrylate d'éthyle (EEA), l'éthylène/acrylate de méthyle (EMA) ou l'éthylène/acétate de vinyle (EVA), et en ce que la quantité d'acide itaconique qui a été greffée est de 0,1 à 1% du poids de la polyoléfine.

2. Film, feuille, tube, câble, bouteille ou autre produit composite comprenant au moins une couche de polyoléfine modifiée chimiquement selon la revendication 1, au moins une couche de métal, de matière plastique polaire ou d'un autre matériau polaire, et éventuellement au moins une couche d'une polyoléfine non modifiée.

3. Produit composite selon la revendication 2, caractérisé en ce qu'il s'agit d'un film.

4. Produit composite selon la revendication 2, caractérisé en ce qu'il y au moins une couche métallique d'acier, d'aluminium ou de cuivre et au moins une couche de matière plastique polaire de polyamide, polyester ou EVOH.